# EUROPEAN PATENT SPECIFICATION

(11) **EP 3 808 535 B1**
(45) Date of publication and mention of the grant of the patent: **28.09.2022**
(21) Application number: 20201008.8
(22) Date of filing: 09.10.2020
(51) Int. Cl.: B29C 51/26, B65H 29/56

(54) **APPARATUS AND METHOD FOR MOVING PRODUCTS MADE OF PLASTICS**
VERFAHREN UND VORRICHTUNG ZUM BEWEGEN EINES KUNSTSTOFFARTIKELS
PROCEDE ET APPAREIL DE MISE EN MOUVEMENT D'UN ARTICLE EN PLASTIQUE

(30) Priority: 16.10.2019 IT 201900019055
(43) Date of publication of application: 21.04.2021
(73) Proprietor: C.M.S. S.p.A., 24019 Zogno (BG) (IT)
(72) Inventor: VILLA, Giuseppe, 21100 Varese (IT)
(74) Representative: Villanova, Massimo

(56) References cited:
- EP-A2- 0 206 838
- GB-A- 928 346
- US-A- 4 428 723

## Description

### Background of the invention

The invention relates to a method and/or an apparatus for moving products made of plastics, for example products in sheet, film or slab form.

Specifically, but not exclusively, the invention can be applied for moving products made of plastics in the form of a strip for extracting the products from a thermoforming apparatus, where "strip" means a product provided with one dimension (thickness) less than the other two dimensions (width and a length).

The invention may be applied, for example, to extracting products made of thermoformable material from a machine, in particular a press, a thermoforming apparatus, or other similar machines.

The products in the thermoforming apparatus are usually loaded, moved and unloaded by using a conveyor of closed-loop type.

The conveyor comprises a driven pulley and an idler pulley, on which a closed loop chain (or belt) can be fitted.

The conveyor is built into the thermoforming apparatus and extends in a horizontal direction, i.e. a direction parallel to a plane on which the thermoforming apparatus rests, from an inlet zone where the product is loaded, to an outlet zone where the product is extracted/unloaded.

Two chain conveyors are arranged near mutually opposite edges of the machine, so as not to occupy the space dedicated to the operation of moulding the product.

Each conveyor is provided with teeth sized to engage with at least a first face of the product, in particular with an abutting portion thereof. The teeth of the conveyor when they are engaged with the product extend vertically, i.e. in a direction that is transverse to the horizontal direction.

It is known to so load the product onto the conveyor that the teeth of each chain penetrate the respective portions of the first face of the product. The product is thus locked on the conveyor and moves when the conveyor is driven. The conveyor is driven to move the product and taken to a moulding zone where it is subjected to the known moulding process, and once terminated, moving the worked (or moulded) product to the outlet zone is known.

On the aforesaid mutually opposite edges of the thermoforming apparatus, at a height that is substantially the same as that occupied by the conveyors, fixed guides are fitted that are arranged for supporting the product during movement thereof.

Each guide is shaped to define a seat that houses an edge of the product, where edge of the product means an end portion of the first face and a second face of the product opposite the first face.

Each guide extends in the same horizontal direction as the conveyor and has substantially the same extent so as to support the product in all the zones of the thermoforming apparatus.

In the outlet zone, i.e. in the zone where the idler pulley of the conveyor is positioned (and where the guide ends), each tooth of the chain is disengaged from the side portion of the previously penetrated product, releasing the penetrated product gradually. An operator positioned in the outlet zone can thus receive and extract the processed product from the thermoforming apparatus.

One drawback arises from the fact of not being able to extract the product easily in other zones of the thermoforming apparatus other than the outlet zone, for example in the event of an unexpected machine fault. If however this should occur an operator should extract the product manually, lifting the product upwards to disengage the product from the teeth and at the same time deforming the product to remove the product from the guides.

This operation has different limits and drawbacks and is not always practicable. It is at the same time tiresome because of the dimensions and weight of the moulded product locked on the conveyor that has to be lifted, and risky/hazardous, considering the probability of the operator getting injured during movement/extraction of the product (for example in the event of undesired contact with the teeth of the conveyor). In addition, there is the complexity and delicacy that are due to the removal of the product both from the seat of the guides and from the teeth of the conveyor, which leads to the product being deformed excessively, and to the product being scored and chipped.

It is further particularly complicated to reach manually all the zones of the thermoforming apparatus to extract the product.

Each of US4428723A and GB928346A discloses a method and an apparatus as in the preambles of claims 1 and 8.

### Summary of the invention

One object of the invention is to provide a solution to the problem of how to extract a product made of plastics from a thermoforming apparatus, in particular a product made of plastics engaged and locked on cogged conveying means.

One object of the invention is to overcome one or more of the aforesaid limits and drawbacks of the prior art.

One object of the invention is to move the product to extract the product automatically from the cogged conveying means.

One object of the invention is to extract a product made of plastics in any zone of the thermoforming apparatus and at any instant of time.

One advantage is to provide a method for moving a product made of plastics on a thermoforming apparatus so as to extract the product from cogged conveying means automatically, simply and rapidly.

One advantage is to provide a thermoforming apparatus provided with an extracting device arranged for moving the product automatically, simply and rapidly.

One advantage is to provide an extracting device that is constructionally simple and cheap to perform extraction of the product.

One advantage is to provide an extracting device having reduced dimensions and space take-up.

One advantage is to reduce the probability of damaging the product during the extraction step.

One advantage is to avoid, or at least significantly reduce, the interventions of the operator to move the product and the number of accidents linked to the aforesaid interventions.

Such objects and advantages, and still others, are achieved by a thermoforming method and/or an apparatus according to the independent claims

In one embodiment, one method for extracting a product made of plastics from cogged conveying means comprises the step of moving first guide means facing a first face of the product, along a first direction between a first position in which the first guide means is near a root of at least one of the teeth and the product is engaged and locked on the teeth of the cogged conveying means, and a second position in which the first guide means is near a tip of at least one of the teeth and supports the first face of the product that is disengaged from the teeth.

In one embodiment, a thermoforming apparatus comprises cogged conveying means provided with teeth that engages a product made of plastics, an extracting device that in turn comprises first guide means that is movable along a first direction between a first position in which this first guide means is near a root of at least one of the teeth of the cogged conveying means and the product is engaged and locked on the teeth, and a second position in which the aforesaid first guide means is near a tip of at least one of the teeth and supports the first face of the product that is disengaged from the teeth.

### Brief description of the drawings

The invention can be better understood and implemented with reference to the attached drawings that illustrate one embodiment thereof by way of non-limiting example, in which:
Figure 1 is a perspective view of a thermoforming apparatus that uses an extracting device for handling products made of plastics according to the present the invention;
Figure 2 is a vertical raised side view of the thermoforming apparatus of Figure 1;
Figure 3 is a detailed view showing the extracting device of Figure 1;
Figures 4, 5 and 6 are section views taken along line IV of Figure 2 that show some steps of the handling of the product made of plastics to extract the product from cogged conveying means;
Figures 7, 8 and 9 are perspective views of Figures 4, 5 and 6.

### Detailed description

With reference to the aforesaid figures, with 100 a thermoforming apparatus has been indicated overall.

The thermoforming apparatus 100 may be suitable, in particular, for processing one or more products A made of plastics, in particular mould processing, for example hot moulding.

The thermoforming apparatus 100 may comprise an inlet zone 12 in which the product A is loaded. The thermoforming apparatus 100 may comprise an outlet zone 14, arranged downstream of the aforesaid inlet zone 12, in which the product can be moved away from the thermoforming apparatus 100. The inlet zone 12 and the outlet zone 14 are arranged along a substantially horizontal feeding direction 8, i.e. a direction parallel to a plane P on which the thermoforming apparatus 100 rests. The thermoforming apparatus 100 may further comprise a processing zone 13 arranged downstream of the inlet zone 12 to perform moulding processing, or thermoforming, on the product A. In the processing zone 13, there are moulds and other components that are of known type and are not shown that are suitable for performing moulding processing/thermoforming on the product. They will not therefore be described.

The product A made of plastics that are processed in the thermoforming apparatus 100 may be made in the form of a slab, sheet or film.

The product A may be in the form of a strip, where "strip" means a product that has three set dimensions, a first dimension (for example the thickness) being considerably less than a second and a third dimension (for example width and a length). The second and the third dimension (width and length) extend on another plane (not shown) parallel to the plane P whilst the first dimension extends transversely to the other plane.

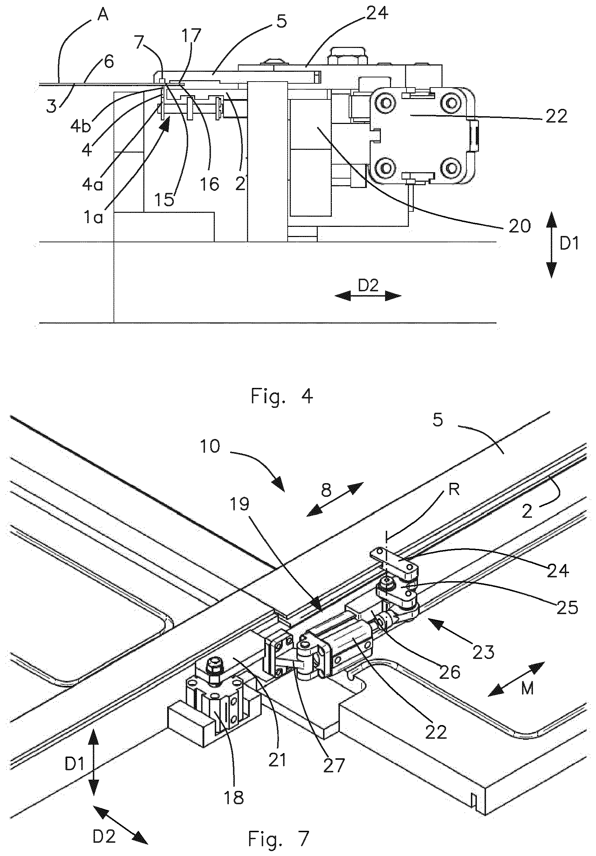

The fact that the product comprises two dimensions that prevail over the thickness means that two faces are defined, i.e. a first face 3 and a second face 6 that are opposite one another, as visible in Figures 4 to 6.

On the thermoforming apparatus 100, conveying means may be provided that is arranged for conveying the product A along the feeding direction 8 between the inlet zone 12 and the outlet zone 14.

The conveying means may be of the closed loop type and may comprise cogged conveying means 1.

The cogged conveying means 1 may comprise a toothed conveyor of known type, for example comprising a driven pulley and an idler pulley, between which a closed-loop chain may be fitted (or alternatively a belt or other flexible conveying element).

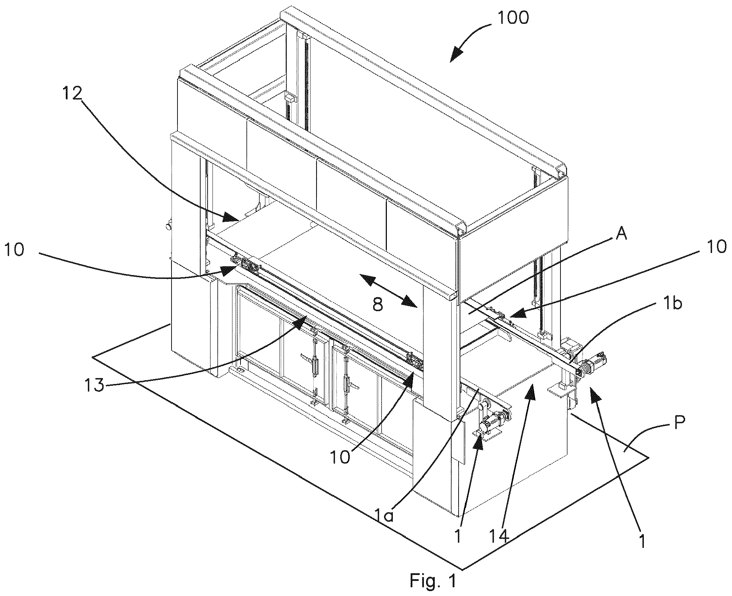

The cogged conveying means 1 may extend in a direction parallel to the feeding direction 8; in one embodiment of the invention shown in Figure 1, the cogged conveying means 1 comprises a first toothed conveyor 1a arranged on a first side edge of the thermoforming apparatus 100, and a second toothed conveyor 1b arranged on a second side edge of the thermoforming apparatus 100, the aforesaid second edge being opposite the first edge. For example, considering a symmetric plane (not shown) of the thermoforming apparatus parallel to the feeding direction 8 and transferred to the plane P, the first toothed conveyor 1a and the second toothed conveyor 1b are arranged in a specular manner on the first edge and on the second edge of the thermoforming apparatus 100. The arrangement of the first 1a and of the second 1b toothed conveyor enables the product A to be conveyed along the feeding direction 8 without them occupying the space dedicated to the processing/moulding operation of the product A.

The first 1a and the second 1b toothed conveyor are provided with a plurality of teeth 4 sized for engaging with at least the first face 3 of the product A.

The teeth 4 may be arranged in a row along the feeding direction 8 between the inlet zone 12 and the outlet zone 14 of the thermoforming apparatus 100. For greater clarity, in figures 4, 5, 6 with the numeric reference 4 only one tooth of the row has been indicated.

Further, the teeth of the first toothed conveyor 1a are substantially the same in shape and size as the teeth of the second toothed conveyor 1b.

With reference to Figures 4, 5 and 6, the first face 3 of the product A that engages with the tooth 4 is the lower face of the product A. The product A is then arranged and locked on the cogged conveying means 1.

In order to be clearer, the teeth 4 of the first toothed conveyor 1a may engage with a first abutting portion 15 of the first face 3 of the product A, and the teeth of the second toothed conveyor 1b may engage with a second abutting portion (not shown) of the aforesaid first face 3, the second abutting portion being opposite the first abutting portion 15.

The teeth 4 may engage with the first face 3, making an incision on the first face 3 and traversing the first face 3 partially or can traverse the entire thickness of the product A.

In Figures 4, 5 and 6, for the sake of simplicity, detailed views have been shown in which only one edge of the thermoforming apparatus 100 is shown, for example the first edge where the first toothed conveyor 1a is arranged and the first abutting portion 15 of the first face 3 of the product A. It remains understood that on the second edge that is not shown, in a manner that is specular to the first edge, the second toothed conveyor 1b and the second abutting portion of the first face of the product are arranged.

On the thermoforming apparatus 100, in particular in the vicinity of the cogged conveying means 1, at least one extracting device 10 may fitted that is arranged for moving the product A, in particular extracted from the cogged conveying means 1.

The extracting device 10 comprises first guide means 2 that faces, and is arranged for supporting, the first face 3 of the product A.

In the embodiment shown in Figures 4, 5 and 6 the first guide means 2 is fitted to the first side edge in the vicinity of the first toothed conveyor 1a.

The first guide means 2 faces in particular a first end portion 16 of the first face 3. The end portion 16 may be more external than the abutting portion 15. The end portion 16 may be arranged in the vicinity of, or can be adjacent to, the abutting portion 15.

The extracting device 10 comprises further first guide means, which may be structurally identical to the first guide means 2, which is arranged for supporting the first face 3 of the product A.

The further first guide means is arranged in the second side edge of the thermoforming apparatus 100 in the vicinity of the second toothed conveyor 1b.

The further first guide means faces in particular a second end portion (not shown) of the first face 3, opposite the end portion 16.

Also in this case, for the sake of simplicity, in the attached figures detailed views have been shown in which only the first edge is shown where the first guide means 2 and the first end portion 16 are arranged. It remains understood that on the second edge shown, in a manner that is specular to the first edge, the second toothed conveyor 1b and the second abutting portion of the first face of the product are arranged.

In the context of the invention, reference is made without distinction to the first guide means 2 or to the further first guide means, they being structurally the same as one another.

The first guide means 2 may extend in the same direction as the cogged conveying means 1.

The first guide means 2 may have substantially the same extent as the cogged conveying means 1 so as to support the product A in all the zones of the thermoforming apparatus 100.

The first guide means 2 may comprise for example a plate, sized to support the first face 3 of the product. The plate faces the end portion 16 and is intended to come into contact with the latter, as will be explained below.

The extracting device 10 further comprises second guide means 5 that faces a second face 6 of the product A. The second face 6 being opposite and substantially parallel to the first face 3.

The second guide means 5 may be structurally identical to the first guide means 2.

In the embodiment shown in Figures 4, 5 and 6, the second guide means 5 is fitted to the first side edge of the thermoforming apparatus 100. The second guide means 5 may be arranged at a set distance measured along a first direction D1 from the first guide means 2. The first direction D1 may be oriented transversely to one of the faces of the product A, for example to the first face 3. In particular the first direction D1 may be substantially orthogonal to one of the faces of the product A, for example to the first face 3. The first direction D1 may be oriented transversely to the feeding direction 8.

The second guide means 5 faces in particular a first strip portion 17 of the second face 6. The first strip portion 17 is substantially aligned on the first end portion 16 along the first direction D1.

The extracting device 10 comprises further second guide means structurally identical to the second guide means 5, which also faces the second face 6.

The further second guide means is arranged (in a specular manner) on the second side edge of the machine tool 100 and may be arranged at a set distance from the further first guide means along the first direction D1.

The further second guide means faces in particular a second strip portion (not shown) of the second face 6, the second strip portion being opposite (specular to) the first strip portion.

Also in this case for the sake of simplicity, in attached Figures 4, 5 and 6 detailed views have been shown in which only the first edge is shown of the machine tool where the second guide means 5 and the first strip portion 17 are arranged. It remains understood that on the second edge, which is not shown, there are arranged, in a manner that is specular to the first edge, the further second guide means and the second strip portion of the second face of the product. Also in this case, reference is made without distinction to the second guide means 5 or to the further second guide means, they being structurally the same as one another.

The second guide means 5 may comprise a plate facing the strip portion 17 of the second face 6.

The second guide means 5 is oriented substantially parallel to the first guide means 2 and may extend in the same direction as the first guide means 2.

The first guide means 2 may be movable along the first direction D1 between a first position in which the aforesaid first guide means 2 is near a root 4a of at least one tooth of the plurality of teeth 4 and the product A is engaged and locked on the plurality of teeth 4 of the cogged conveying means 1, and a second position in which the first guide means 2 is near a tip 4b of the tooth of the plurality of teeth 4 and supports the first face 3 of the product A, the latter being disengaged from the plurality of teeth 4.

In the embodiment shown in Figure 4, the first guide means 2 in the first position is placed at a set distance, measured along the first direction D1, from the end portion 16 of the first face 3 of the product A. In a version that is alternative and not shown, the first guide means in the first position may be in contact with the aforesaid end portion of the first face of the product.

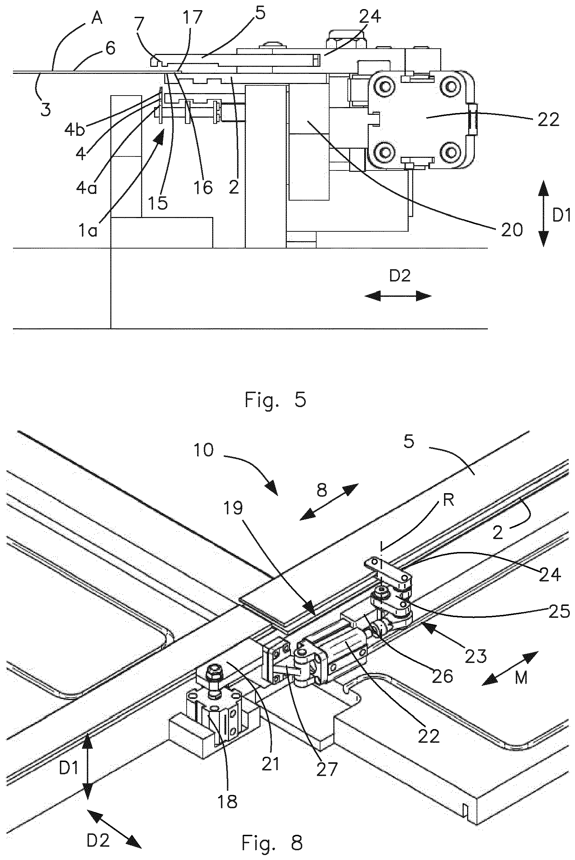

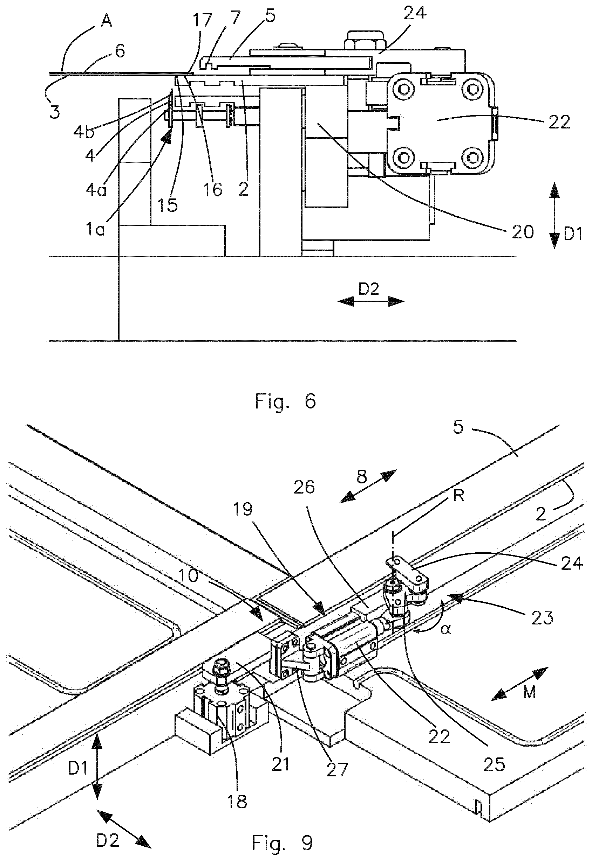

In the second position shown in Figures 5 and 6, the first guide means 2 is in contact with the end portion 16 of the first face 3 of the product A.

The root 4a and the tip 4b of one of the teeth 4 are aligned substantially parallel to the first direction D1. In this manner, movement is facilitated, in particular extraction, or disengagement, of the product A from the cogged conveying means 1.

The first guide means 2 and the second guide means 5 are connected to a first actuator 18 that is drivable to move the aforesaid first guide means 2 and second guide means 5 along the first direction D1. The second guide means 5 is further connected to a second actuator 22 that is drivable to move the aforesaid second guide means 5 along the second direction D2 that is transverse to the first direction D1.

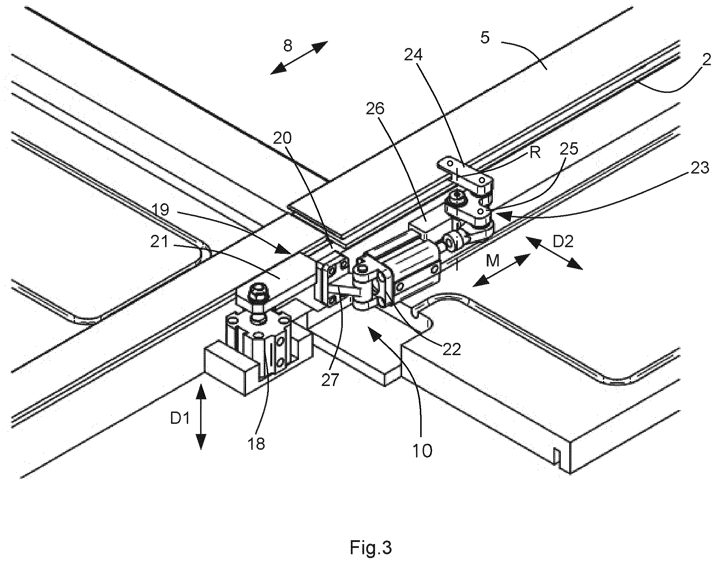

In other words, with reference to Figure 3 the first guide means 2 is connected to at least one first actuator 18 that is drivable to move the aforesaid first guide means 2 along the first direction D1. The first actuator 18 may comprise an actuator of linear type.

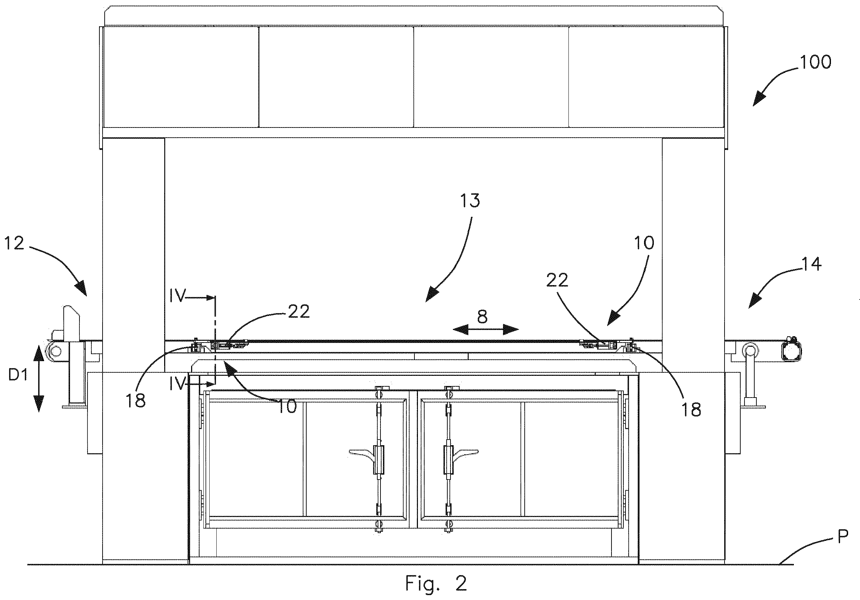

The number of first actuators connectable to the first guide means may vary. For example, in the embodiment shown in Figure 2, two actuators 18 are shown connected to the first guide means 2, one arranged in the vicinity of the inlet zone 12 and one in the vicinity of the outlet zone 14. The like occurs to the further first guide means fitted to the second edge of the thermoforming apparatus and is not illustrated.

With reference to Figure 3, the first guide means 2 is connected to the first actuator 18 by a first support unit 19. The first support unit 19 is connected on one side to the first guide means 2 and on the other to a stem of the first actuator 18.

The first support unit 19 may comprise a support bar 20 connected to the first guide means 2, for example in contact with the first guide means 2. The first support unit 20 may further comprise a bracket 21 connected, in particular by mechanical connection of known type, to the stem of the first actuator 18.

The support bar 20 and the bracket 21 may be connected together, for example welded.

The second guide means 5 is movable along the second direction D2 between a first configuration in which the second guide means 5 covers at least one portion of the second face 6, for example the strip portion 17 (Figures 4 and 5), and a second configuration in which the second guide means 5 leaves this strip portion 17 free (Figure 6) of the second face 6.

The second guide means 5 spaced apart from and substantially parallel to the first guide means 2 whilst it moves along the second direction D2.

The second guide means 5 is provided with at least one shaped portion 7 sized to house the plurality of teeth 4 of the cogged conveying means 1. In other words, on the plate (second guide means 5) a shaped portion is obtained, for example a groove, that extends parallel to the feeding direction 8 between the inlet zone 12 and the outlet zone 14. The shaped portion 7 is in a position that is substantially aligned on that of the teeth 4 along the direction D1, so as to define a housing seat for the teeth 4 of the cogged conveying means 1.

The second guide means 5 is also movable along the first direction D1 between an engaged position in which the second guide means 5, preferably the shaped portion 7, is near the tip 4b of one of the teeth 4, and a disengaged position in which the second guide means 5, preferably the shaped portion 7, is spaced away from the aforesaid tip 4b.

In the engaged position shown in Figure 4 the second guide means 5 may be in contact, or not, with the strip portion 17 of the face 6 of the product.

In the engaged position, the second guide means 5 may be at least partially engaged by the tip 4b of the teeth. In the engaged position the shaped portion 7 may be at least partially engaged by the tip 4b of the teeth.

In fact, if the teeth are to engage the first face 3 through the entire thickness of the product A, the tips 4b thereof may be housed in the aforesaid shaped portion 7.

The second guide means 5 is movable along the second direction D2 when it is near the aforesaid disengaged position.

The second guide means 5 is connected to at least one second actuator 22 that is drivable to move the second guide means 5 along the second direction D2. The second actuator 22 may comprise an actuator of linear type.

The number of second actuators 22 that are connectable to the second guide means 5 may vary. For example in the embodiment shown in Figure 2, two actuators 22 are provided that are connected to the second guide means 5, one arranged in the vicinity of the inlet zone 12 and one in the vicinity of the outlet zone 14. The like occurs for the further second guide means that are on the second edge of the thermoforming apparatus and are not illustrated.

The second actuator 22 and/or the second support unit 23 may be connected to the first actuator 18 to be movable along the first direction D1. In particular in the embodiment according to the invention, the second actuator 22 and/or the second support unit 23 are connected to the first support unit 19.

In order to be clearer, with reference to Figures 3, 4, 5 and 6, the second guide means 5 is connected to the second actuator 22 by a second support unit 23.

The second actuator 22 may be driven to move the stem thereof along a driving direction M transverse to the first direction D1 and substantially parallel to the feeding direction 8.

The second support unit 23 is arranged for modifying the direction of the movement set by the second actuator 22 (along the drive direction M) to move the second guide means 5 along the second direction D2, as explained below.

In the embodiment shown in Figures 3, 4, 5 and 6, the second support unit 23 may comprise a first connecting element 24 connected rotatably at a first end to the second guide means 5. The first connecting element 24 may comprise, for example, a rod, or a fork, hinged or pivoted on the first end on the second guide means 5.

The first connecting element 24 is further connected rotatably to a second connecting element 25 in a second end (opposite the first end).

The second connecting element 25 may comprise a stiff element, for example a lever.

The first connecting element 24 and the second connecting element 25 are movable rotatably with respect to one another.

The second connecting element 25 is connected rotatably to a base element 26 so as to be able to rotate around a rotation axis R parallel to the first direction D1. The base element 26 acts as a support element for the second connecting element 25.

The base element 26 may be connected, for example by mechanical connecting means (of known type), to the support bar 20 of the first support unit 19 and is movable along the first direction D1.

The second connecting element 25 is lastly connected rotatably to a stem of the second actuator 22 (for example hinged).

In use, by driving the second actuator 22, the stem moves along the drive direction M for a set stroke matched by a rotation by a set angle α of the second connecting element 25 around the rotation axis R. The rotation of the second connecting element 25 moves along the second direction D2 the first connecting element 24, and consequently moves the second guide means 5 along the aforesaid second direction D2.

The second actuator 22 may be connected to the support bar 20 of the first support unit 19 so as to be movable along the first direction D1.

The second actuator 22 may be hinged on the support bar 20.

In order to be clearer, the second actuator 22 may be connected rotatably, in particular hinged, on a third connecting element 27 fixed in a removable manner to the support bar 20. The third connecting element 27 may comprise a plate or a bracket.

The operation of the thermoforming apparatus 100 may actuate, in particular, a method for moving a product A made of plastics, as disclosed below.

In particular, the operation of the thermoforming apparatus 100 may actuate a method for moving a product A made of plastics, in the form of a sheet or slab, by cogged conveying means 1 arranged on the thermoforming apparatus 100. The cogged conveying means 1 is provided with a plurality of teeth 4 arranged in a row along a feeding direction 8 between an inlet zone 12 and an outlet zone 14 of the thermoforming apparatus 100.

The method may comprise the step of moving the first guide means 2 arranged on the thermoforming apparatus 100 and facing a first face 3 of the product A, along a first direction D1, oriented transversely to one of the faces of the product A, between a first position in which the first guide means 2 is near 4a a tooth of the plurality of teeth 4 and the product A is engaged and locked on the teeth 4, and a second position in which said first guide means 2 is near a tip 4b of one of the teeth 4 and supports the first face 3 of the product A that is disengaged from the teeth 4.

The teeth may engage with an abutting portion 15 of the first face 3 of the product; the first guide means 2 may face an end portion 16 of the first face 3 of the product A, which is more external than, and in the vicinity of, the abutting portion 15.

The root 4a and the tip 4b of the tooth of the plurality of teeth 4 are aligned substantially parallel to the first direction D1.

The method for moving the product A may further envisage the step of moving the second guide means 5 arranged on the thermoforming apparatus 100 and facing a second face 6 of the product A, along a second direction D2 transverse to the first direction D1. The second face 6 is opposite the first face 3 along the first direction D1. The second guide means 5 is moved along the second direction D2 between a first configuration in which it covers at least one portion of the second face 6, and a second configuration in which it leaves free at least one portion of the second face 6. In particular, the second guide means 5 is arranged to cover a strip portion 17 of the second face 6 of the product A.

The second guide means 5 is arranged at a set distance measured along the first direction D1 with respect to the first guide means 2. The second guide means 5 is oriented substantially parallel to the first guide means 2.

The method for moving the product A may comprise the step of moving the second guide means 5 along the second direction D2 to make the second guide means 5 remain spaced apart and substantially parallel to the first guide means 2.

The second guide means 5 is provided with at least one shaped portion 7 sized to house the plurality of teeth 4 of the cogged conveying means 1.

The step of moving the first guide means 2 may also comprise the step of moving also the second guide means 5 along the first direction D1 between an engaged position in which the second guide means 5, preferably the shaped portion 7 of the aforesaid second guide means 5, is near the tip 4b of one of the teeth 4, and a disengaged position in which the second guide means 5, preferably the shaped portion 7, is spaced away from the aforesaid tip 4b.

The second guide means 5 is moved along the second direction D2 when the latter is in the vicinity of said disengaged position.

The first guide means 2 and second guide means 5 are both connected to a first actuator 18 that is drivable to move the first guide means 2 and second guide means 5 along the first direction D1.

Moving the second guide means 5 along the first direction D1 together with the first guide means 2 is also envisaged.

The second guide means 5 is further connected to a second actuator 22 that is drivable to move the second guide means 5 along the second direction D2.

Owing to the extracting device, in particular to the first and to the second guide means, the product is moved, in particular extracted from the cogged conveying means, without accidental falls and undesired movements occurring.

This avoids the operator working in the vicinity of the teeth, avoiding undesired accidents.

Owing to the extracting device, it is possible to move the product, in particular extract the product from the cogged conveying means and remove the product from the thermoforming apparatus, in any position between the inlet zone and an outlet zone of the aforesaid thermoforming apparatus.

Further, the product is not removable from the thermoforming apparatus, and thus secured between the first guide means and second guide means, until the second guide means is moved along the second direction and frees the second face of the product.

Lastly, the compactness of the extracting device enables the operator to lift and remove the product from the thermoforming apparatus with great facility; in fact, in a disengaged configuration the second guide means remains substantially parallel to the first guide means and has reduced vertical space take-up (measured along the first direction D1).

## Claims

1. Method for moving a product (A) made of thermoformable plastics in sheet or slab form by cogged conveying means (1) arranged on a thermoforming apparatus (100), said cogged conveying means (1) being provided with teeth (4) arranged in a row along a feeding direction (8) between an inlet zone (12) and an outlet zone (14) of said thermoforming apparatus (100), said method **being characterized by** comprising the step of moving a first guide means (2) of said thermoforming apparatus (100), facing a first face (3) of said product (A), along a first direction (D1), oriented transversely to said feeding direction (8), between a first position in which said first guide means (2) is near a root (4a) of a tooth of said teeth (4) and said product (A) is engaged and locked on said teeth (4), and a second position in which said first guide means (2) is near a tip (4b) of said teeth and supports said first face (3) of said product (A) that is disengaged from said teeth (4).

2. Method according to claim 1, wherein said root (4a) and said tip (4b) of said tooth are aligned in a manner substantially parallel to said first direction (D1).

3. Method according to claim 1 or 2, further comprising the step of shifting second guide means (5) of said thermoforming apparatus (100), facing a second face (6) of said product (A) opposite said first face (3), along a second direction (D2) that is transverse to said first direction (D1) between a first configuration in which said second guide means (5) covers at least one strip portion (17) of said second face (6), and a second configuration in which said second guide means (5) leaves said at least one strip portion (17) of said second face (6) free.

4. Method according to claim 3, wherein said second guide means (5) is arranged at a preset distance along said first direction (D1) with respect to, and is oriented in a manner substantially parallel to, said first guide means (2), said second guide means (5) being shifted along said second direction (D2) so as to remain spaced apart from and substantially parallel to said first guide means (2).

5. Method according to claim 3 or 4, comprising the step of moving said second guide means (5) along said first direction (D1) between an engaged position in which said second guide means (5), in particular at least one shaped portion (7) of said second guide means (5), is near said tip (4b), and a disengaged position in which said second guide means (5), in particular said at least one shaped portion (7), is spaced apart from said tip (4b).

6. Method according to claim 5, wherein said shifting said second guide means (5) along said second direction (D2) occurs when said second guide means (5) is in said disengaged position.

7. Method according to claim 5 or 6, wherein said moving said second guide means (5) along said first direction (D1) occurs at the same time as said moving said first guide means (2).

8. Thermoforming apparatus (100) for thermoforming a product (A) made of plastics in sheet or slab form, comprising an inlet zone (12) where the product (A) is inserted into said thermoforming apparatus (100), an outlet zone (14) from where the product (A) exits said thermoforming apparatus (100), cogged conveying means (1) arranged for conveying said product (A) along a feeding direction (8) between said inlet zone (12) and outlet zone (14), said cogged conveying means (1) being provided with teeth (4) sized for engaging a first face (3) of said product (A), said teeth (14) being arranged in a row along said feeding direction (8), at least one extracting device (10) arranged for moving said product (A) **characterized in that said at least one extracting device (10) comprises** a first guide means (2) facing, and arranged for supporting, said first face (3); said first guide means (2) being movable along a first direction (D1), that is transverse to the feeding direction (8), between a first position in which said first guide means (2) is near a root (4a) of a tooth of the teeth (4) and said product (A) is engaged and locked on said teeth (4), and a second position in which said first guide means (2) is near a tip (4b) of said tooth and supports said first face (3) of said product (A), the latter being disengaged from said teeth (4).

9. Thermoforming apparatus (100) according to claim 8, wherein said root (4a) and said tip (4b) of said tooth are aligned in a manner substantially parallel to said first direction (D1).

10. Thermoforming apparatus (100) according to claim 8 or 9, wherein said extracting device (10) further comprises second guide means (5) facing a second face (6) of said product (A) opposite said first face (3), said second guide means (5) being movable along a second direction (D2) that is transverse to said first direction (D1), between a first configuration in which said second guide means (5) covers at least one strip portion (17) of said second face (6), and a second configuration in which said second guide means (5) leaves said at least one strip portion (17) of said second face (6) free.

11. Thermoforming apparatus (100) according to claim 10, wherein said second guide means (5) is arranged at a preset distance along said first direction (D1) with respect to, and is oriented in a manner substantially parallel to, said first guide means (2), said second guide means (5) remaining spaced apart from and substantially parallel to said first guide means (2) whilst said second guide means (5) is shifted along said second direction (D2).

12. Thermoforming apparatus (100) according to claim 10 or 11, wherein said second guide means (5) is provided with at least one shaped portion (7) sized for housing said teeth (4) of said cogged conveying means (1).

13. Thermoforming apparatus (100) according to any one of claims 10 to 12, wherein said second guide means (5) is movable along said first direction (D1) between an engaged position in which said second guide means (5), in particular at least one shaped portion (7) of said second guide means (5), is near said tip (4b), and a disengaged position in which said second guide means (5), in particular said shaped portion (7), is spaced apart from said tip (4b); wherein, in particular, in said engaged position said second guide means (5), in particular said at least one shaped portion (7), is at least partially engaged by said tip (4b).

14. Thermoforming apparatus (100) according to claim 12 or 13, wherein said second guide means (5) is movable along said second direction (D2) when said second guide means (5), in particular said at least one shaped portion (7), is in said disengaged position.

15. Thermoforming apparatus (100) according to any one of claims 10 to 14, wherein said first guide means (2) is connected by a first support unit (19) to a first actuator (18) that is drivable for moving said first guide means (2) along said first direction (D1), and/or wherein said second guide means (5) is connected by a second support unit (23) to a second actuator (22) that is drivable to move said second guide means (5) along said second direction (D2); said second actuator (22) and/or said second support unit (23) being, in particular, connected to said first actuator (18) to be moved along said first direction (D1).

## Patentansprüche

1. Verfahren zum Bewegen eines Produkts (A) aus thermoformbaren Kunststoffen in Bogen- oder Plattenform mittels an einer Thermoformvorrichtung (100) angeordneter Fördermittel (1), wobei die gezahnten Fördermittel (1) mit Zähnen (4) versehen sind, die in einer Reihe, entlang einer Zuführrichtung (8) zwischen einer Einlasszone (12) und einer Auslasszone (14) der Thermoformvorrichtung (100) angeordnet sind, wobei das Verfahren **dadurch gekennzeichnet ist, dass** es den Schritt umfasst des Bewegens eines ersten Führungsmittels (2) der Thermoformvorrichtung (100), das zu einer ersten Fläche (3) des Produkts (A) weist, entlang einer ersten Richtung (D1), die quer zu der Zuführrichtung (8) orientiert ist, zwischen einer ersten Position, in welcher das erste Führungsmittel (2) nahe eines Fußes (4a) eines Zahns der Zähne (4) mit dem Produkt (A) in Eingriff steht und festgehalten ist an dem Zahn (4) und einer zweiten Position, in welcher das erste Führungsmittel (2) nahe einer Spitze (4b) des Zahnes ist und die erste Fläche (3) des Produkts (A) trägt, das außer Eingriff steht mit den Zähnen (4).

2. Verfahren nach Anspruch 1, wobei der Fuß (4a) und die Spitze (4b) des Zahnes in einer Weise im Wesentlichen parallel zu der ersten Richtung (D1) ausgerichtet sind.

3. Verfahren nach Anspruch 1 oder 2, ferner umfassend den Schritt des Verschiebens eines zweiten Führungsmittels (5) der Thermoformvorrichtung (100), das zu einer zweiten Fläche (6) des Produkts (A), entgegengesetzt zu der ersten Fläche (3) weist, entlang einer zweiten Richtung (D2), die quer zu der ersten Richtung (D1) ist zwischen einer ersten Konfiguration, in welcher das zweite Führungsmittel (5) wenigstens einen Streifenabschnitt (17) der zweiten Fläche (6) abdeckt und einer zweiten Konfiguration, in welcher das zweite Führungsmittel (5) den wenigstens einen Streifenabschnitt (17) der zweiten Fläche (6) freilässt.

4. Verfahren nach Anspruch 3, wobei das zweite Führungsmittel (5) in einem voreingestellten Abstand entlang der ersten Richtung (D1) in Bezug auf und in einer Weise, im Wesentlichen parallel zu dem ersten Führungsmittel (2) angeordnet ist, wobei das zweite Führungsmittel (5) entlang der zweiten Richtung (D2) verschoben wird, um von dem ersten Führungsmittel (2) räumlich getrennt und im Wesentlichen parallel zu diesem zu bleiben.

5. Verfahren nach Anspruch 3 oder 4, umfassend den Schritt des Bewegens des zweiten Führungsmittels (5) entlang der ersten Richtung (D1) zwischen einer Eingriffsposition, in welcher das zweite Führungsmittel (5) und zwar insbesondere wenigstens ein geformter Abschnitt (7) des zweiten Führungsmittels (5) nahe der Spitze (4b) ist und einer Außer-Eingriffsposition, in welcher das zweite Führungsmittel (5), insbesondere der wenigstens eine geformte Abschnitt, von der Spitze (4b) beabstandet ist.

6. Verfahren nach Anspruch 5, wobei das Verschieben des zweiten Führungsmittels (5) entlang der zweiten Richtung (D2) auftritt, wenn das zweite Führungsmittel (5) in der Außer-Eingriffsposition ist.

7. Verfahren nach Anspruch 5 oder 6, wobei das Bewegen des zweiten Führungsmittels (5) entlang der ersten Richtung (D1) zur selben Zeit wie das Bewegen des ersten Führungsmittels (2) auftritt.

8. Thermoformvorrichtung (100) zum Thermoformen eines Produkts (A) aus Kunststoffen in Bogen- oder Plattenform, aufweisend eine Einlasszone (12), wo das Produkt (A) in die Thermoformvorrichtung (100) eingesetzt wird und eine Auslasszone (14), von welcher das Produkt (A) die Thermoformvorrichtung (100) verlässt, gezahnte Fördermittel (1), die angeordnet sind zum Befördern des Produkts (A) entlang einer Zuführrichtung (8) zwischen der Einlasszone (12) und der Auslasszone (14), wobei die gezahnten Fördermittel (1) mit Zähnen (4) versehen sind, die bemessen sind zum Greifen einer ersten Fläche (3) des Produkts (A), wobei die Zähne (14) in einer Reihe entlang der Zuführrichtung (8) angeordnet sind, sowie wenigstens eine Extraktionsvorrichtung (10), die angeordnet ist zum Bewegen des Produkts (A) **dadurch gekennzeichnet, dass** die wenigstens eine Extraktionsvorrichtung (10) aufweist: ein erstes Führungsmittel (2), das weist zu der und angeordnet ist zum Tragen der ersten Fläche (3); wobei das erste Führungsmittel (2) bewegbar ist entlang einer ersten Richtung (D1), die quer zu der Zuführrichtung (8) ist, zwischen einer ersten Position, in welcher das erste Führungsmittel (2) nahe eines Fußes (4a) eines Zahnes der Zähne (4) ist und das Produkt (A) in Eingriff steht mit und festgehalten ist an den Zähnen (4) und einer zweiten Position, in welcher das erste Führungsmittel (2) nahe einer Spitze (4b) des Zahnes ist und die erste Fläche (3) des Produkts (A) trägt, wobei letzteres außer Eingriff steht mit den Zähnen (4).

9. Thermoformvorrichtung (100) nach Anspruch 8, wobei der Fuß (4a) und die Spitze (4b) des Zahnes auf im Wesentlichen parallele Weise zu der ersten Richtung (D1) ausgerichtet sind.

10. Thermoformvorrichtung (100) nach Anspruch 8 oder 9, wobei die Extraktionsvorrichtung (10) ferner ein zweites Führungsmittel (5) umfasst, das zu einer zweiten Fläche (6) des Produkts (A), entgegengesetzt zu der ersten Fläche (3), weist, wobei das zweite Führungsmittel (5) entlang einer zweiten Richtung (D2) bewegbar ist, die quer zu der ersten Richtung (D1) ist, und zwar zwischen einer ersten Konfiguration, in welcher das zweite Führungsmittel (5) wenigstens einen Streifenabschnitt (17) der zweiten Fläche (6) abdeckt und einer zweiten Konfiguration, in welcher das zweite Führungsmittel (5) den wenigstens einen Streifenabschnitt (17) der zweiten Fläche (6) freilässt.

11. Thermoformvorrichtung (100) nach Anspruch 10, wobei das zweite Führungsmittel (5) in einem voreingestellten Abstand entlang der ersten Richtung (D1) in Bezug auf und in einer Weise, im Wesentlichen parallel zu dem ersten Führungsmittel (2) orientiert ist, wobei das zweite Führungsmittel (5) von dem ersten Führungsmittel (2) beabstandet und dazu im Wesentlichen parallel bleibt, während das zweite Führungsmittel (5) entlang der zweiten Richtung (D2) verschoben wird.

12. Thermoformvorrichtung (100) nach Anspruch 10 oder 11, wobei das zweite Führungsmittel (5) mit wenigstens einem geformten Abschnitt (7) versehen ist, der zur Aufnahme der Zähne (4) der gezahnten Fördermittel (1) bemessen ist.

13. Thermoformvorrichtung (100) nach einem der Ansprüche 10 bis 12, wobei das zweite Führungsmittel (5) bewegbar ist entlang der ersten Richtung (D1) zwischen einer Eingriffsposition, in welcher das zweite Führungsmittel (5), insbesondere wenigstens ein geformter Abschnitt (7) des zweiten Führungsmittels (5), nahe der Spitze (4b) ist und einer Außer-Eingriffsposition, in welcher das zweite Führungsmittel (5), insbesondere der geformte Abschnitt (7) von der Spitze (4b) beabstandet ist; wobei insbesondere in der Eingriffsposition das zweite Führungsmittel (5), insbesondere der wenigstens eine geformte Abschnitt (7), wenigstens teilweise von der Spitze (4b) gegriffen ist.

14. Thermoformvorrichtung (100) nach Anspruch 12 oder 13, wobei das zweite Führungsmittel (5) entlang der zweiten Richtung (D2) bewegbar ist, wenn das zweite Führungsmittel (5), insbesondere der wenigstens eine geformte Abschnitt (7) in der Außer-Eingriffsposition ist.

15. Thermoformvorrichtung (100) nach einem der Ansprüche 10 bis 14, wobei das erste Führungsmittel (2) über eine erste Trageinheit (19) mit einem ersten Aktuator (18) verbunden ist, der antreibbar ist, um das erste Führungsmittel (2) entlang der ersten Richtung (D1) zu bewegen und/oder wobei das zweite Führungsmittel (5) mittels einer zweiten Trageinheit (23) mit einem zweiten Aktuator (22) verbunden ist, der antreibbar ist, um das zweite Führungsmittel (5) entlang der zweiten Richtung (D2) zu bewegen; wobei der zweite Aktuator (22) und/oder die zweite Trageinheit (23) insbesondere mit dem ersten Aktuator (18) verbunden sind, um entlang der ersten Richtung (D1) bewegt zu werden.

## Revendications

1. Procédé pour déplacer un produit (A) fait de matières plastiques thermoformables sous forme de feuille ou de brame par un moyen de convoyage cranté (1) disposé sur un appareil de thermoformage (100), ledit moyen de convoyage cranté (1) étant doté de dents (4) disposées en rangée le long d'une direction d'alimentation (8) entre une zone d'entrée (12) et une zone de sortie (14) dudit appareil de thermoformage (100), ledit procédé étant **caractérisé en ce qu'**il comprend l'étape de déplacement d'un premier moyen de guidage (2) dudit appareil de thermoformage (100), faisant face à une première face (3) dudit produit (A), le long d'une première direction (D1), orientée transversalement à ladite direction d'alimentation (8), entre une première position dans laquelle ledit premier moyen de guidage (2) est proche d'une racine (4a) d'une dent parmi lesdites dents (4) et ledit produit (A) est engagé et verrouillé sur lesdites dents (4), et une deuxième position dans laquelle ledit premier moyen de guidage (2) est proche d'une pointe (4b) desdites dents et supporte ladite première face (3) dudit produit (A) qui est désengagé desdites dents (4) .

2. Procédé selon la revendication 1, dans lequel ladite racine (4a) et ladite pointe (4b) de ladite dent sont alignées d'une manière sensiblement parallèle à ladite première direction (D1).

3. Procédé selon la revendication 1 ou 2, comprenant en outre l'étape de décalage d'un deuxième moyen de guidage (5) dudit appareil de thermoformage (100), faisant face à une deuxième face (6) dudit produit (A) opposée à ladite première face (3), le long d'une deuxième direction (D2) qui est transversale à ladite première direction (D1) entre une première configuration dans laquelle ledit deuxième moyen de guidage (5) couvre au moins une partie en bande (17) de ladite deuxième face (6), et une deuxième configuration dans laquelle ledit deuxième moyen de guidage (5) laisse libre ladite au moins une partie en bande (17) de ladite deuxième face (6).

4. Procédé selon la revendication 3, dans lequel ledit deuxième moyen de guidage (5) est disposé à une distance préétablie le long de ladite première direction (D1) par rapport audit premier moyen de guidage (2), et est orienté d'une manière sensiblement parallèle à ce dernier, ledit deuxième moyen de guidage (5) étant décalé le long de ladite deuxième direction (D2) de façon à rester espacé dudit premier moyen de guidage (2) et sensiblement parallèle à ce dernier.

5. Procédé selon la revendication 3 ou 4, comprenant l'étape de déplacement dudit deuxième moyen de guidage (5) le long de ladite première direction (D1) entre une position engagée dans laquelle ledit deuxième moyen de guidage (5), en particulier au moins une partie façonnée (7) dudit deuxième moyen de guidage (5), est proche de ladite pointe (4b), et une position désengagée dans laquelle ledit deuxième moyen de guidage (5), en particulier ladite au moins une partie façonnée (7), est espacé de ladite pointe (4b) .

6. Procédé selon la revendication 5, dans lequel ledit décalage dudit deuxième moyen de guidage (5) le long de ladite deuxième direction (D2) a lieu quand ledit deuxième moyen de guidage (5) est dans ladite position désengagée.

7. Procédé selon la revendication 5 ou 6, dans lequel ledit déplacement dudit deuxième moyen de guidage (5) le long de ladite première direction (D1) a lieu en même temps que le déplacement dudit premier moyen de guidage (2).

8. Appareil de thermoformage (100) pour thermoformer un produit (A) fait de matières plastiques sous forme de feuille ou de brame, comprenant une zone d'entrée (12) où le produit (A) est inséré dans ledit appareil de thermoformage (100), une zone de sortie (14) par laquelle le produit (A) sort dudit appareil de thermoformage (100), un moyen de convoyage cranté (1) disposé de façon à convoyer ledit produit (A) le long d'une direction d'alimentation (8) entre lesdites zone d'entrée (12) et zone de sortie (14), ledit moyen de convoyage cranté (1) étant doté de dents (4) dimensionnées pour engager une première face (3) dudit produit (A), lesdites dents (14) étant disposées en rangée le long de la direction d'alimentation (8), au moins un dispositif d'extraction (10) étant disposé de manière à déplacer ledit produit (A), **caractérisé en ce que** ledit au moins un dispositif d'extraction (10) comprend un premier moyen de guidage (2) faisant face à ladite première face (3) et disposée de manière à supporter cette dernière ; ledit premier moyen de guidage (2) étant mobile le long d'une première direction (D1), qui est transversale à la direction d'alimentation (8), entre une première position dans laquelle ledit premier moyen de guidage (2) est proche d'une racine (4a) d'une dent parmi les dents (4) et ledit produit (A) est engagé et verrouillé sur lesdites dents (4), et une deuxième position dans laquelle ledit premier moyen de guidage (2) est proche d'une pointe (4b) de ladite dent et supporte ladite première face (3) dudit produit (A), ce dernier étant désengagé desdites dents (4).

9. Appareil de thermoformage (100) selon la revendication 8, dans lequel ladite racine (4a) et ladite pointe (4b) de ladite dent sont alignées d'une manière sensiblement parallèle à ladite première direction (D1).

10. Appareil de thermoformage (100) selon la revendication 8 ou 9, dans lequel ledit dispositif d'extraction (10) comprend en outre un deuxième moyen de guidage (5) faisant face à une deuxième face (6) dudit produit (A) opposée à ladite première face (3), ledit deuxième moyen de guidage (5) étant mobile le long d'une deuxième direction (D2) qui est transversale à ladite première direction (D1), entre une première configuration dans laquelle ledit deuxième moyen de guidage (5) couvre au moins une partie en bande (17) de ladite deuxième face (6), et une deuxième configuration dans laquelle ledit deuxième moyen de guidage (5) laisse libre ladite au moins une partie en bande (17) de ladite deuxième face (6).

11. Appareil de thermoformage (100) selon la revendication 10, dans lequel ledit deuxième moyen de guidage (5) est disposé à une distance préétablie le long de ladite première direction (D1) par rapport audit premier moyen de guidage (2), et est orienté d'une manière sensiblement parallèle à ce dernier, ledit deuxième moyen de guidage (5) restant espacé dudit premier moyen de guidage (2) et sensiblement parallèle à ce dernier tandis que ledit deuxième moyen de guidage (5) est décalé le long de ladite deuxième direction (D2).

12. Appareil de thermoformage (100) selon la revendication 10 ou 11, dans lequel ledit deuxième moyen de guidage (5) est doté d'au moins une partie façonnée (7) dimensionnée de manière à loger lesdites dents (4) dudit moyen de convoyage cranté (1).

13. Appareil de thermoformage (100) selon l'une quelconque des revendications 10 à 12, dans lequel ledit deuxième moyen de guidage (5) est mobile le long de ladite première direction (D1) entre une position engagée dans laquelle ledit deuxième moyen de guidage (5), en particulier au moins une partie façonnée (7) dudit deuxième moyen de guidage (5), est proche de ladite pointe (4b), et une position désengagée dans laquelle ledit deuxième moyen de guidage (5), en particulier ladite partie façonnée (7), est espacé de ladite pointe (4b) ; dans lequel, en particulier, dans ladite position engagée, ledit deuxième moyen de guidage (5), en particulier ladite au moins une partie façonnée (7), est au moins partiellement engagé par ladite pointe (4b).

14. Appareil de thermoformage (100) selon la revendication 12 ou 13, dans lequel ledit deuxième moyen de guidage (5) est mobile le long de ladite deuxième direction (D2) quand ledit deuxième moyen de guidage (5), en particulier ladite au moins une partie façonnée (7), est dans ladite position désengagée.

15. Appareil de thermoformage (100) selon l'une quelconque des revendications 10 à 14, dans lequel ledit premier moyen de guidage (2) est connecté par une première unité de support (19) à un premier actionneur (18) qui peut être entraîné de manière à déplacer ledit premier moyen de guidage (2) le long de ladite première direction (D1), et/ou dans lequel ledit deuxième moyen de guidage (5) est connecté par une deuxième unité de support (23) à un deuxième actionneur (22) qui peut être entraîné de manière à déplacer ledit deuxième moyen de guidage (5) le long de ladite deuxième direction (D2) ; ledit deuxième actionneur (22) et/ou ladite deuxième unité de support (23) étant en particulier connectés audit premier actionneur (18) devant être déplacé le long de ladite première direction (D1).
